# EUROPÄISCHE PATENTSCHRIFT

(11) **EP 3 651 924 B1**
(45) Veröffentlichungstag und Bekanntmachung des Hinweises auf die Patenterteilung: **28.04.2021**
(21) Anmeldenummer: 18733837.1
(22) Anmeldetag: 20.06.2018
(51) Int. Cl.: B23F 5/16

(54) **VERFAHREN ZUM BEARBEITEN EINER VERZAHNUNG UND DAZU HERGERICHTETE VERZAHNUNGSMASCHINE, SOWIE COMPUTERPROGRAMMPRODUKT DAFÜR**
METHOD FOR MACHINING A TOOTHING AND TOOTHING MACHINE DESIGNED FOR SAME, AS WELL AS COMPUTER PROGRAM PRODUCT FOR SAME
PROCÉDÉ D'USINAGE D'UNE DENTURE ET MACHINE À TAILLER LES ENGRENAGES CONÇUE À CET EFFET, ET PRODUIT-PROGRAMME D'ORDINATEUR APPROPRIÉ

(30) Priorität: 11.07.2017 DE 102017006553
(43) Veröffentlichungstag der Anmeldung: 20.05.2020
(73) Patentinhaber: Gleason-Pfauter Maschinenfabrik GmbH, 71636 Ludwigsburg (DE)
(72) Erfinder: KRESCHEL, Jürgen, 71282 Hemmingen (DE)
(74) Vertreter: Leinweber & Zimmermann
(86) Internationale Anmeldenummer: PCT/EP2018/066346
(87) Internationale Veröffentlichungsnummer: WO 2019/011602

(56) Entgegenhaltungen:
- DE-A1-102014 201 110
- US-A1- 2011 268 523
- US-A1- 2016 158 860

## Beschreibung

Die Erfindung betrifft ein Verfahren zum Bearbeiten einer eine Drehachse aufweisenden Verzahnung gemäß dem Oberbegriff des Anspruchs 1, bei dem ein um seine Drehachse drehend angetriebenes Bearbeitungswerkzeug unter Ausführung einer Relativbewegung zwischen Bearbeitungswerkzeug und Verzahnung zum Erzeugen einer über die volle Verzahnungsbreite vorgegebenen Flankengeometrie der Verzahnung in Bearbeitungseingriff Material von der Verzahnung abnimmt, wobei die vorgegebene Flankengeometrie zu einer eine Bewegungsbahn der Werkzeugmitte gegenüber der Verzahnungsdrehachse festlegenden Bewegungssteuerung mit definiertem nicht verschwindenden axialen Vorschub bei definierter Zustellung zwischen Bearbeitungswerkzeug und Verzahnung passt, sowie eine zur Ausübung dieses Verfahrens gesteuerte Verzahnungsmaschine und ein Computerprogrammprodukt, welches wenn auf einer Verzahnungsmaschine ausgeführt, diese zu einem derartigen Verfahren steuert. Ein derartiges Verfahren ist aus dem Dokument US2011268523 A bekannt, das auch eine Verzahnungsmaschine und ein Computerprogrammprodukt offenbart.

Derartige Verfahren sind in einer Vielzahl von unterschiedlichen Verfahrensgestaltungen bekannt, beispielsweise wird hierzu im Folgenden das Wälzschälen herangezogen.

Beim Wälzschälen trägt ein Schälrad in wälzendem Bearbeitungseingriff Material von einem Verzahnungsrohling ab und erzeugt dabei üblicherweise in mehreren Durchgängen eine Verzahnung mit einer vorgegebenen Flankengeometrie, wobei Verzahnung und Werkzeug in jedem Durchgang eine axiale Vorschubbewegung ausführen, bis alle Flankenbereiche bearbeitet sind. Nach dem letzten Durchgang wird eine angestrebte (End)geometrie für die (Schäl-)Bearbeitung erreicht. Gegenüber der Endgeometrie des späteren fertiggestellten Werkstücks weist diese üblicherweise noch ein Aufmaß auf, um trotz Härteverzügen nach der üblicherweise nachfolgenden Hart-/Feinbearbeitung die korrekte Endgeometrie zuzulassen. Der letzte Durchgang des Wälzschälens wird oftmals als Schlichtschnitt ausgeführt, um eine möglichst glatte Flankenfläche zu erzeugen.

Im Wälzeingriff entsprechen die kinematischen Verhältnisse des Schälrads zu der Verzahnung denen eines Schraubradgetriebes. Das heißt, die Drehachse des Schälrads ist gegenüber der Verzahnungsdrehachse in einer Normalenebene zur Achsabstandsachse um einen Achskreuzwinkel geneigt, und die Schnittgeschwindigkeit hängt von dem Achskreuzwinkel ab. Die Wahl des Achskreuzwinkels und die Werkzeugauslegung werden in Abhängigkeit der Geometrie des zu bearbeitenden Werkstücks ausgelegt, um, die Flankengeometrie der Verzahnung mit der passenden Bewegungssteuerung auf einer Verzahnungsmaschine zu erzeugen.

Der Erfindung liegt die Aufgabe zugrunde, ein Verfahren der eingangs genannten Art insbesondere im Hinblick auf eine flexible und schnelle Verzahnungsbearbeitung zu verbessern.

Diese Aufgabe wird in verfahrenstechnischer Hinsicht durch eine Weiterbildung des Verfahrens gelöst (siehe Anspruch 1), die im Wesentlichen dadurch gekennzeichnet ist, dass in einer ersten Bearbeitung die Relativbewegung nur für die Erzeugung eines insbesondere überwiegenden Anteils der Flankengeometrie gemäß dieser Bewegungssteuerung ausgeführt wird, wohingegen ein weiterer, insbesondere der verbleibende Anteil der Flankengeometrie in einer zweiten Bearbeitung erzeugt wird, bei welcher der Abstand der Werkzeugmitte von der Verzahnungsdrehachse gegenüber der festliegenden Bewegungsbahn in einer die Werkzeugmitte von der Verzahnung entfernenden Weise geändert ist, und bei der der dadurch bedingten Änderung des Bearbeitungseingriffs durch eine gegenüber der Bewegungssteuerung der ersten Bearbeitung zusätzlich vorgenommenen Bewegungsänderung der Relativbewegung entgegengewirkt wird.

Dabei beruht die Erfindung zunächst auf der Erkenntnis, dass das Schälrad aufgrund des eingestellten Achskreuzwinkels und den den Fortschritt der Zahnflankenbearbeitung bestimmenden Verlauf der Hüllschnitte des Schälrads an linker und rechter Zahnflanke nach Beendigung eines Arbeitsdurchgangs in Axialrichtung der bearbeiteten Verzahnung gesehen über das axiale Verzahnungsende hinausragt, auf welches sich die axiale Vorschubrichtung bei der Bearbeitung zubewegt. Während bei scheibenartigen Verzahnungen eine solche Werkstückendlage gegenüber der Verzahnung weniger beachtlich ist, ist dieser Endlage bei der Fertigung von Verzahnungen Rechnung zu tragen, die neben der Verzahnung selbst noch weitere axial von der Verzahnung angeordnete Strukturen aufweisen, die bezüglich der Bearbeitung der Verzahnung als potentielle Störkonturen anzusehen sind. Befinden sich die Störkonturen zu nahe an der Verzahnung selbst, so käme ggf. das Wälzschälen als Bearbeitungsverfahren nicht mehr in Betracht und die entsprechende Verzahnung wäre dann beispielsweise durch Wälzstoßen herzustellen. Gegebenenfalls besteht jedoch auch noch die Möglichkeit, durch Einstellen eines möglichst geringen Achskreuzwinkels eine günstigere Endlagenpositionierung zu erreichen, so dass gerade noch keine Kollision mit der Störkontur entstehen kann.

Weiter beruht die Erfindung auf der Erkenntnis, dass sich die Endlage des Bearbeitungswerkzeugs gegenüber der Verzahnung nach Fertigstellung der angestrebten Flankengeometrie im Wesentlichen gleicher Verzahnungstiefe über die Verzahnungsbreite aus zwei unterschiedlichen Komponenten zusammensetzt, zum einen aus einer axialen Überlaufbewegung des Werkzeugs, der nach Vollendung der Bearbeitung einer der Links- und Rechtsflanke bis zur Vollendung der Bearbeitung der anderen Flanke erforderlich ist, da die Hüllschnitte mit der Flankengeometrie der Links- und Rechtsflanke nicht symmetrisch bezüglich der Normalenebene auf die Verzahnungsachse sind. Die andere Komponente ist eine rein geometrische Komponente, die sich daraus ergibt, dass aufgrund des Achskreuzwinkels die Hüllkurve des rotierenden Bearbeitungswerkzeugs auch in der Position, in der die vollständige Bearbeitung an beiden Flanken abgeschlossen ist, axial weiter ragt als die Normalenebene zur Verzahnungsachse, in welcher der Bearbeitungskontakt am Ende des Überlaufs liegt. Die Bewegung der Hüllkurve während der Relativbewegung folgt der Bewegungsbahn der Werkzeugmitte.

Durch die Erfindung kann diejenige Komponente, die sich aus dem Überlauf ergibt, verringert oder sogar ganz vermieden werden, indem die übliche Bearbeitung mit dem axialen Vorschub bei beibehaltener Zustellung nicht bis zur Fertigstellung der Herstellung der Flankengeometrie ausgeführt wird, sondern nur über einen Teil der Flankengeometrieerzeugung, bevorzugt wenigstens soweit, dass eine der Links- und Rechtsflanken auf die vorgegebene Flankengeometrie bearbeitet ist. Von dieser ersten Bearbeitung wird für einen anderen, insbesondere den verbleibenden Zahnflankenanteil abgewichen, die vorherige Bewegung also nicht wie üblich bis zum Erreichen der herkömmlichen Endlage nach Durchfahren des Überlaufs fortgesetzt. Vielmehr ändert man die Relativbewegung zwischen Bearbeitungswerkzeug und Verzahnung beispielsweise derart, dass der Axialvorschub verringert oder sogar gestoppt wird und sich das Werkzeug beispielsweise radial von der Verzahnung entfernt. Die vorgegebene Flankengeometrie auf dem anderen Anteil, die in der ersten Bearbeitung nicht erreicht wird, wird aber dennoch dadurch erreicht, dass in der zweiten Bearbeitung eine entgegenwirkende und im Wesentlichen kompensierende Korrekturbewegung ausgeführt wird, welche eine gegenüber der ersten Bearbeitung zusätzlich geänderte Bewegung wenigstens einer nicht mit der axialen Vorschubachse übereinstimmender Bewegungsachse ausgeführt wird. Die Zahnflanke in der zweiten Bearbeitung entsteht somit beispielsweise durch eine Überlagerungsbewegung in Form einer Zusatzdrehung um die Verzahnungsdrehachse (oder auch die Werkzeugdrehachse) (zusätzliche Bewegungsachse), mit der Bewegung über die radiale Bewegungsachse. Das Bearbeitungswerkzeug entfernt sich von der bearbeiteten Verzahnung gegenüber einer üblicherweise beibehaltenen konstanten Zustellung bis zum Ende der üblicherweise vorgenommenen Überlaufbewegung. Beide (erste und zweite) Bearbeitungen gehören dem gleichen Durchgang an.

Somit gelingt es, vorgegebene Fiankengeometrien auch mit über die Verzahnungsbreite im Wesentlichen gleichbleibender Verzahnungstiefe zu erzeugen, obwohl das Bearbeitungswerkzeug dazu nicht den herkömmlichen Überlauf voll ausführen muss, sondern sich in dem kritischen Bereich auf einer anderen Bewegungsbahn gegenüber der Verzahnung bewegt, welche an einer Störkontur eines die Verzahnung tragenden Werkstücks vorbeiführbar ist. Am bewegungsauslaufenden Ende kann die Verzahnung ohne Ausbildung eines Sackendes offen abschließen.

Insbesondere wird von dem Bearbeitungswerkzeug nicht mehr die Endlage gegenüber der Verzahnung eingenommen, welche andernfalls in Fortführung der ersten Bearbeitung bis hin zum Durchlaufen auch des Überlauf erreicht worden wäre. Der radiale ([x²+y²]^{1/2}) Abstand ist in der Endlage größer. Die erfindungsgemäße Bearbeitung erfolgt bevorzugt jedenfalls im letzten (tiefsten) Bearbeitungsdurchgang (Schäldurchgang).

Die Erfindung erlaubt somit, wenn beispielsweise für das Wälzschälen eingesetzt, die Bearbeitung von Werkstücken mit einem größeren Achskreuzwinkel als bei herkömmlicher Bearbeitung aufgrund Störkonturen zulässig, und dadurch höhere Schnittgeschwindigkeiten und kürzere Bearbeitungszeiten. Zum anderen erlaubt die Erfindung auch eine flexiblere Anwendung beispielsweise des Wälzschälens auf eine Klasse von Werkstücken, die andernfalls nur noch im Wälzstoßen zu bearbeiten wären.

Die erste Bearbeitung erfolgt bevorzugt im Zweiflankenverfahren. Die zweite Bearbeitung erfolgt bevorzugt im Einflankenverfahren, der Übergang von erster zu zweiter Bearbeitung erfolgt somit bevorzugt dann, wenn eine der Links- und Rechtsflanken hinsichtlich der vorgegebenen Flankengeometrie fertigbearbeitet ist.

Der werkzeugseitige Bearbeitungseingriffsbereich ist in beiden Bearbeitungen bevorzugt derselbe.

Grundsätzlich ist nicht ausgeschlossen, dass man die zweite Bearbeitung vor der ersten Bearbeitung vornimmt (kinematische Bewegungsumkehr). Besonders bevorzugt schließt die zweite Bearbeitung jedoch zeitlich an die erste Bearbeitung an.

In einer besonders bevorzugten Ausführungsform ändert man die Bewegungsbahn der Werkzeugmitte über die radiale (Zustell-)Achse. Auf diese Weise lässt sich die entgegenwirkende Zusatzbewegung mit einer radialen Austauchbewegung kombinieren. Es sind jedoch (primär bei Außenverzahnungen) auch tangentiale Austauchbewegungen grundsätzlich denkbar, ggf. auch in Überlagerung mit einer radialen Austauchbewegung.

In einer weiteren besonders bevorzugten Gestaltung ist eine der/die zusätzlich entgegenwirkenden Bewegungsachsen durch eine relative Zusatzdrehung von Verzahnungsdrehachse und/oder Bearbeitungsdrehachse realisiert. Diese Zusatzdrehung zum Ausgleichen des durch die Ausweichbewegung von zweiter zu erster Bearbeitung geänderten Eingriffs ist besonders einfach umsetzbar, da maschinenseitig ohnehin Zusatzdrehungen zu der reinen synchronen Wälzkopplung der Drehachsen einstellbar und eingestellt sind, um beispielsweise die Wälzverzahnung bei Schrägverzahnungen und axialem Vorschub aufrechtzuerhalten.

Gegebenenfalls können auch andere Bewegungsachseinstellungen von der ersten zur zweiten Bearbeitung geändert werden, wie etwa eine Tangentialachse (orthogonal zu Achsabstandsachse (d.h. radialer Zustellachse) und mit Orthogonal-Komponente oder senkrecht zur Verzahnungsdrehachse). Es kann auch daran gedacht werden, den Achskreuzwinkel bzw. die Bewegungsachse zu dessen Einstellung an der ausgleichenden Änderungsbewegung zu beteiligen.

Zweckmäßig ist vorgesehen, dass die Verzahnung und das Bearbeitungswerkstück während der Relativbewegung in Wälzeingriff miteinander stehen, insbesondere dass eine kontinuierliche Bearbeitung erfolgt. Dies sorgt weiter für kurze Bearbeitungszeiten.

In einer weiteren besonders bevorzugten Ausgestaltung ist vorgesehen, dass die Drehachsen von Verzahnung und Bearbeitungswerkzeug unter einem von Null verschiedenen Achskreuzwinkel angeordnet sind. Damit kommt zum Ausdruck, dass sich die Erfindung besonders für Verfahren eignet, deren zugrundeliegende Kinematik das des Schraubradgetriebes ist, und die Verfahrensarten Wälzschälen umfasst, jedoch auch die Hartbearbeitungsverfahren des Honens oder des Hartschälens. In diesem Zusammenhang werden auch genau diese Bearbeitungsverfahren bevorzugt, bei denen die Schnittgeschwindigkeit bei den Bearbeitungen von dem Achskreuzwinkel abhängt.

Die Erfindung ist sowohl für die Weich- als auch für die Hartbearbeitung nutzbar. In bevorzugten Anwendungen ist das Bearbeitungswerkzeug ein Werkzeug mit geometrisch bestimmter Schneide, insbesondere ein Schälrad. Eine besonders bevorzugte Anwendung der Erfindung liegt im Wälzschäiverfahren. Das Schälrad könnte als Einzelwerkzeug vorliegen. Es ist jedoch auch daran gedacht, dass es Teil eines Kombi- oder Tandemwerkzeugs ist, welches beispielsweise ein weiteres Schälrad koaxial trägt, mit welchem zusätzliche Bearbeitungen vorgenommen werden können, wie etwa Entgraten, Anfasen oder das Einarbeiten von Hinterlegungen.

Wie oben erläutert, kann bei der Erfindung der axiale Vorschub der ersten Bearbeitung in der zweiten Bearbeitung gestoppt werden (nicht mehr weitergeführt werden). Dies bietet sich besonders bei radial stark ausgedehnten Störkonturen an. Es ist jedoch dessen Weiterführung denkbar, einerseits in geringerem Maße (etwa weniger als 70%, bevorzugt weniger als 40%, insbesondere weniger als 20% gegenüber dem der ersten Bearbeitung), was letztlich in einer entsprechenden Verringerung des Überlaufs resultiert. Je nach radialer Ausdehnung einer Störkontur könnte in axialer Richtung gesehen die Vorschubbewegung auch zu Ende geführt werden, wenn sich dazu die Zustellung gegenüber der Zustellung in der ersten Bearbeitung ausreichend ändert. So kann ggf. allein durch Änderung der radialen und/oder tangentialen Zustellposition eine Veränderung der Relativbewegung herbeigeführt werden, die an einer Störkontur vorbeigeführt werden kann. Anders als bei einer gewollten Verringerung der Verzahnungstiefe durch Ausführung einer Austauchbewegung während eines beibehaltenen Axialvorschubs wird bei der Erfindung die angestrebte Flankengeometrie insbesondere mit im Wesentlichen gleichmäßiger Verzahnungstiefe jedoch weiterhin erzeugt, da sie in der zweiten Bearbeitung über zusätzliche entgegenwirkende Einstellungen der Maschinenachsen erfolgt. Der Ausdruck "wesentlich" bedeutet an dieser Stelle, dass etwaige minimale Änderungen der Verzahnungstiefe durch Flankenmodifikationen, wie Balligkeit, der Einstellung von Verschränkungen oder ggf. vorgesehenen weiteren Flankenmodifikationen, die ohnehin innerhalb des Bearbeitungsverfahrens implementiert sind, nicht zu berücksichtigen sind. Die vorgegebene Flankengeometrie selbst ist bevorzugt die einer Evolventenverzahnung, die Erfindung lässt sich jedoch auch auf komplexere Flankenformen anwenden.

Eine Verfahrensgestaltung, bei der die Erfindung besondere Vorteile liefert, ist die, bei der die Verzahnung Teil eines wellenartigen Werkstücks mit einer weiteren Struktur ist, die in einem axialen Abstand von einem der axialen Verzahnungsenden eine radiale Ausdehnung aufweist, die insbesondere weiter reicht als die der Verzahnung selbst. Bei entsprechend großer radialer Ausdehnung wäre die Kontur als im Sinne eines herkömmlichen Verfahrens zu berücksichtigende Störkontur ansehbar.

Durch Anwendung des erfindungsgemäßen Verfahrens lässt sich der Abstand/Sicherheitsabstand von einer solchen Störkontur positiv beeinflussen. Dabei ist durchaus vorgesehen, dass das Bearbeitungswerkzeug und/oder der Achskreuzwinkel derart ausgelegt/eingestellt ist, dass das Bearbeitungswerkzeug im Falle einer Erzeugung des weiteren Anteils der Flankengeometrie unter einer Beibehaltung der Relativbewegung der ersten Bearbeitung einen Sicherheitsabstand von der weiteren Struktur nicht mehr einhalten und insbesondere mit dieser kollidieren würde.

In einer bevorzugten Verfahrensgestaltung beträgt der Achskreuzwinkel der ersten und/oder zweiten Bearbeitung wenigstens 8°, bevorzugt wenigstens 12°, insbesondere wenigstens 16°. Damit lassen sich ordentliche Schnittgeschwindigkeiten erreichen, Werkstücke, die andernfalls bei herkömmlichen Verfahren nur mit sehr geringen Achskreuzwinkeln überhaupt noch bearbeitbar wären, können in kürzerer Zeit hergestellt werden. Die Erfindung ist jedoch ausdrücklich nicht auf derart hohe Achskreuzwinkel eingeschränkt und kann auch bei geringeren Achskreuzwinkeln von 5° oder mehr durchgeführt werden, beispielsweise dann, um ein Werkstück auch unter Ausnutzung der erfindungsgemäß erreichbaren Vorteile überhaupt noch im Wälzschälen erzeugen zu können, um nicht auf das langsamere Bearbeitungsverfahren wie das Wälzstoßen ausweichen zu müssen. Auch Achskreuzwinkel von 20° oder höher sind denkbar.

Das Verfahren ist sowohl für die Bearbeitung von Außenverzahnungen als auch für die Bearbeitung von Innenverzahnungen anwendbar.

In vorrichtungstechnischer Hinsicht wird die Erfindung geschützt durch entsprechend ausgelegte Verzahnungsmaschinen gemäß Anspruch 14 und -steuerungen, etwa ein Computerprogrammprodukt gemäß Anspruch 15, welches wenn auf einer Verzahnungsmaschine ausgeführt, diese zu einem Verfahren nach einem der vorhergehenden Aspekte steuert.

Des Weiteren wird von der Erfindung unter Schutz gestellt eine Verzahnungsmaschine mit einer Werkstückaufnahme zur drehbaren Lagerung einer eine Drehachse aufweisenden Verzahnung und mit einer Werkzeugaufnahme zur um seine Drehachse drehend angetriebenen Lagerung eines Bearbeitungswerkzeugs, und mit Maschinenachsen, die eine radiale Zustellbewegung zwischen Bearbeitungswerkzeug und Verzahnung, eine axiale Vorschubbewegung mit Bewegungskomponente parallel zur Verzahnungsdrehachse erlauben sowie eine Steuereinrichtung, die dazu ausgelegt und programmiert ist, ein Verfahren nach einem der vorgenannten Aspekte auf der Verzahnungsmaschine auszuführen.

Weitere Merkmale, Einzelheiten und Vorteile der Erfindung ergeben sich aus der nachfolgenden Beschreibung mit Bezug auf die beigefügten Figuren, von denen
- Fig. 1: schematisch eine Berührlinie einer Verzahnungsbearbeitung zeigt,
- Fig. 2: ein eine Verzahnung bearbeitendes Schälrad zeigt,
- Fig. 3: Hüllschnittabläufe beim Wälzschälen zeigt,
- Fig. 4: eine zu Fig. 3 passende Abfolge von Zahnflankendarstellungen zeigt,
- Fig. 5: Bahnabweichungen in verschiedenen Ausführungsformen zeigt, und
- Fig. 6: eine Wälzschälmaschine zeigt.

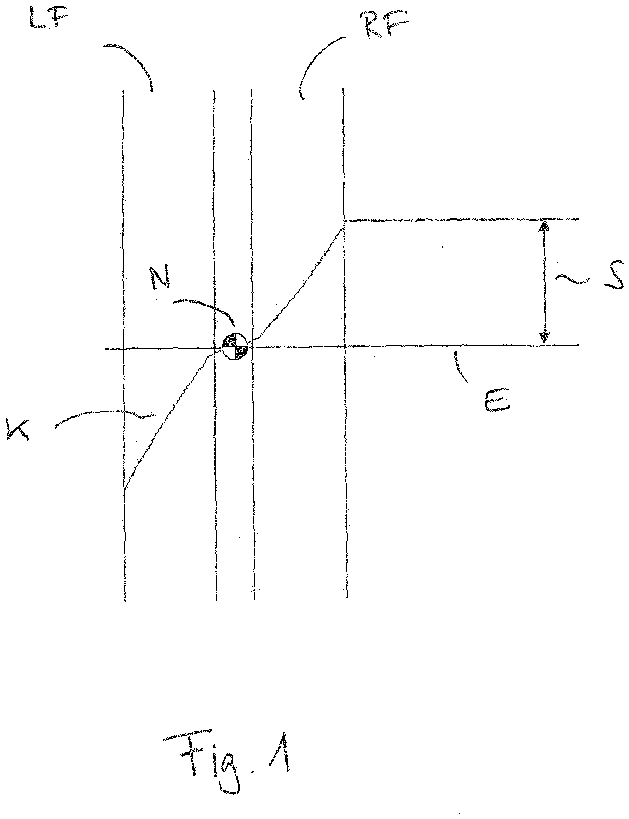

In Fig. 1 ist eine schematische Ansicht auf eine Zahnlücke einer Verzahnung dargestellt, mit LF ist die linke und mit RF eine rechte Zahnflanke bezeichnet, zwischen denen der Lückengrund abgebildet ist. Der darin enthaltene Kreis mit den zwei schwarz ausgefüllten Viertelkreissektoren symbolisiert einen Nullpunkt N im Werkzeugsystem, beispielsweise die (Werkzeugmittenachse auf Höhe einer) Axialposition der Zahnspitze eines Zahns einer Schälradverzahnung. Die mit K bezeichnete Linie in Fig. 1 ist die Berührlinie, wie sie sich in der Profilbildung der Verzahnung beim Power-Skiven ergibt, und welche sich in radialer wie auch in axialer Länge erstreckt. Die Berührlinie entspricht dem Kontakt zwischen Bearbeitungswerkzeug und Verzahnung in einem festgehaltenen Moment des Bearbeitungseingriffs und ist somit einer definierten Axialposition des Werkzeug-Nullpunkts zuzuordnen. Man erkennt bei der eingezeichneten Position des Werkzeug-Nullpunkts, dass (bei axialem Vorschub in Fig. 1 von oben nach unten) die Erzeugung der Flankengeometrie der Linksflanke LF weiter fortgeschritten ist als die der Rechtsflanke RF. Betrachtet man die horizontale durch den Werkzeug-Nullpunkt gehende Linie als axiales Ende E der Verzahnung, so wäre in der dargestellten Lage die Linksflanke bereits fertig ausgebildet, die Bearbeitung der Rechtsflanke allerdings in dem Bereich zwischen der Berührlinie und dem axialen Verzahnungsende E jedoch noch nicht. Der rechts in Fig. 1 dargestellte Doppelpfeil zeigt an, welche zusätzliche axiale Relativbewegung Werkzeug und Verzahnung ausführen müssten, damit auch die Rechtsflanke fertig bearbeitet wird. Diese axiale Strecke ist der Überlaufweg, der bei herkömmlicher Bearbeitung zum Ende eines jeweiligen Bearbeitungsdurchgangs durch weiteren axialen Vorschub zurückgelegt wird, bis die Verzahnungsbearbeitung auch an der Rechtsflanke abgeschlossen ist.

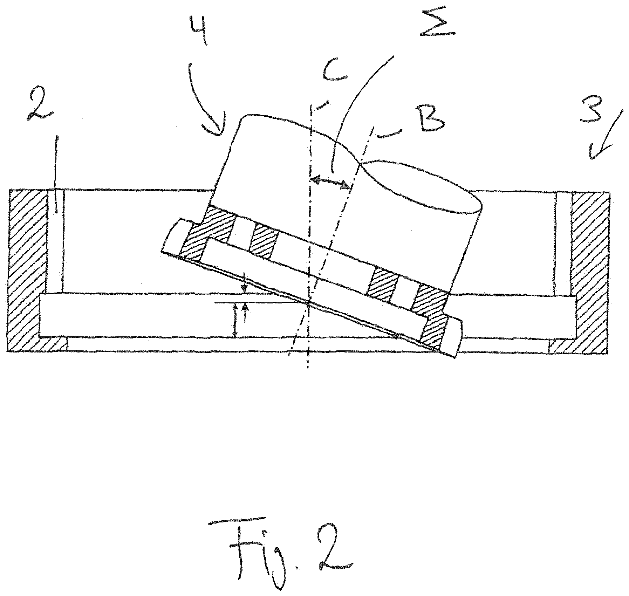

In Fig. 2 ist schematisch ein Schälrad 4 und eine Innenverzahnung 2 dargestellt, die mit dem Schälrad 4 erzeugt wird. Die Blickrichtung auf Fig. 2 ist die einer radialen (Zustell)achse. Man erkennt, dass die Drehachse B des Schälrads gegenüber der Verzahnungsdrehachse C um einen Achskreuzwinkel ∑ geneigt ist. Die in Fig. 2 dargestellte Lage entspricht der, bei welcher die Verzahnungsbearbeitung mit herkömmlichen Wälzschälen abgeschlossen ist, der Werkzeug-Nullpunkt liegt unterhalb des axialen Endes der Verzahnung, um den Überlauf S axial von dieser beabstandet.

Das dargestellte, die Verzahnung 2 tragende Werkstück 3 hat axial unterhalb des Verzahnungsendes noch eine weitere Kontur, die im Folgenden als Störkontur bezeichnet wird. Der in Fig. 2 eingezeichnete doppelseitige Pfeil gibt den Abstand ZS von der Werkzeugmitte in Axialrichtung an, der eingehalten werden muss, damit es trotz der Störkontur zu einer störungsfreien Bearbeitung kommen kann.

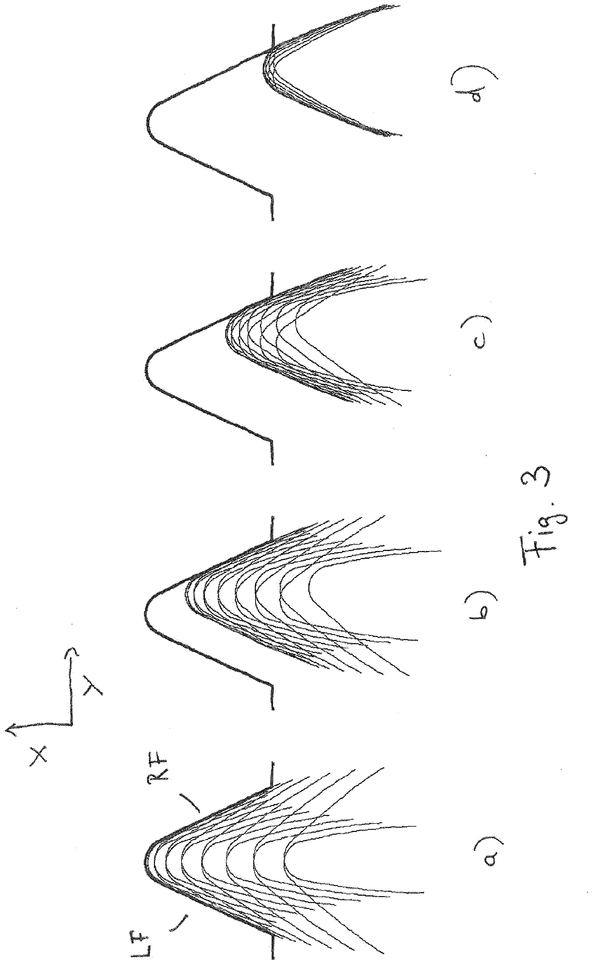

Fig. 3a-d zeigt in einem Schnitt orthogonal zur Verzahnungsachse eine Zahnlückenkontur und des Weiteren Hüllschnitte der Schneidbewegung des Schälrads, die in einer Ausgestaltung der Erfindung in der zweiten Bearbeitung herangezogen werden, bei der der Axialvorschub in der in Fig. 1 dargestellten Lage des Werkzeug-Nullpunkts gestoppt wird und das Bearbeitungswerkzeug einflankig schneidend radial aus der Zahnlücke der Verzahnung austaucht.

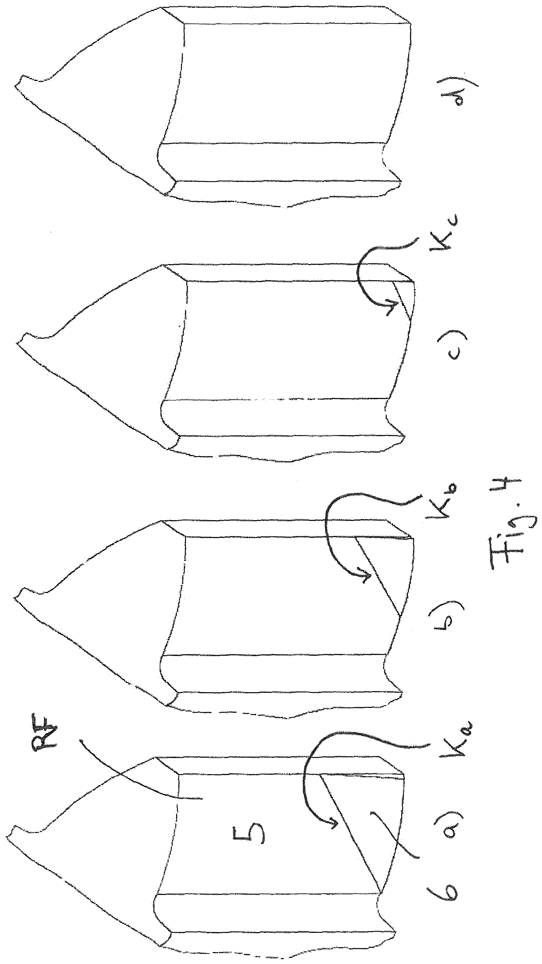

In Fig. 4a-d ist synchron zur Darstellung von Fig. 3a-d dargestellt, wie sich das Profil der Verzahnung in der zweiten Bearbeitung ändert. Der Bereich oberhalb der in Fig. 4a-c erkennbaren diagonalen Berührlinie Kₐ, K_{b}, K_{c} gibt dabei den Flankenbereich an, der bereits entsprechend der angestrebten Flankengeometrie fertig erzeugt ist, der darunterliegende Bereich, der, in dem noch ein Aufmaß gegenüber der angestrebten Flankengeometrie vorhanden ist. So zeigt die Abbildung a) von Fig. 4 die Aufmaßsituation unterhalb der Berührlinie passend zu der Situation von Fig. 1. In dieser Darstellung, die dem Übergang von der ersten zur zweiten Bearbeitung entspricht, besteht noch volle radiale Zustellungstiefe der ersten Bearbeitung, wie aus der Darstellung a) von Fig. 3 erkennbar ist.

Bei dem dargestellten Bearbeitungsbeispiel findet nun eine radiale Austauchbewegung statt, wie aus der relativen Verschiebung der Hüllkurven in Radialachsrichtung X von der Darstellung links a) bis zur Darstellung rechts d) in Fig. 3 erkennbar ist. Des Weiteren ist jedoch auch erkennbar, dass sich die Lage der Hüllkurven zur Lage der Zahnlücke in Tangentialrichtung Y aufgrund einer entsprechend ausgelegten Zusatzbewegung ändert. Die Überlagerung der radialen Austauchbewegung und der Zusatzbewegung ist dabei so aufeinander abgestimmt, dass die Hüllkurve entlang der zu erzeugenden Flankengeometrie entlangbewegt wird, und die Zahnflanke somit fertiggebildet wird, ohne dass es dazu eines weiteren axialen Vorschubs bedarf. Der Vorschub in der zweiten Bearbeitung ist somit in diesem Ausführungsbeispiel ein radial/tangentialer Vorschub. Ohne die tangentiale Zusatzbewegung verbliebe ein Aufmaß und somit eine erhebliche Abweichung von der angestrebten Flankengeometrie.

Auf diese Weise kann der in Fig. 2 erkennbare Überlaufweg insbesondere vollständig eingespart werden, wodurch axialer Spielraum gegenüber eines erforderlichen axialen Abstands ZS zur Vermeidung einer Kollision mit einer Störkontur erhalten wird. Bevorzugt wird dieser axiale Spielraum maximal erstellt, ein entsprechend verringerter Spielraum bleibt erhalten, wenn zwar eine axiale Vorschubbewegung noch ausgeführt wird, aber mit geringerer Rate, die radiale Austauchbewegung somit bei früherer Axialposition einsetzt als herkömmlich. Mit anderen Worten lässt sich eine Bearbeitung wie in den Figuren 3 und 4 skizziert auch erreichen, wenn bei der zweiten Bearbeitung noch ein (geringerer) Axialvorschub gegeben ist. Die Verzahnungstiefe bleibt bis zum axialen Verzahnungsende E erhalten.

Die zum Erreichen der in Fig. 3b-c dargestellten Hüllschnittverläufe gegenüber der Verzahnung herangezogene Anteile der Überlagerungsbewegung betreffend die Tangentialachse Y ist auf mehrere Arten erreichbar. Zum einen könnte dies durch eine Zusatzdrehung ΔC der Verzahnungsdrehachse erreicht werden, jedoch auch durch eine Zusatzdrehung ΔB um die Werkzeugdrehachse, oder eine Überlagerung dieser. Es könnte jedoch auch eine tangentiale Maschinenachse Y gegenüber der ersten Bearbeitung geändert eingestellt werden. Gegebenenfalls kann auch eine Änderung des Achskreuzwinkels ∑ miteinbezogen werden.

Die bevorzugte Variante liegt jedoch in einer Überlagerung eines Radialvorschubs, der für eine gegenüber der ersten Bearbeitung fortlaufend geänderte radiale Zustellung sorgt, mit einer Zusatzdrehung insbesondere der Verzahnungsdrehachse C.

Insbesondere bei der Bearbeitung von Außenverzahnungen kann auch daran gedacht werden, eine tangentiale Austauchbewegung über Maschinenachse Y zu realisieren, und als zusätzliche entgegenwirkende Bewegungsachse zur Herstellung der Flankengeometrie wiederum Zusatzdrehung von Verzahnungs- (B) und/oder Verzahnungsdrehachse (C) heranzuziehen.

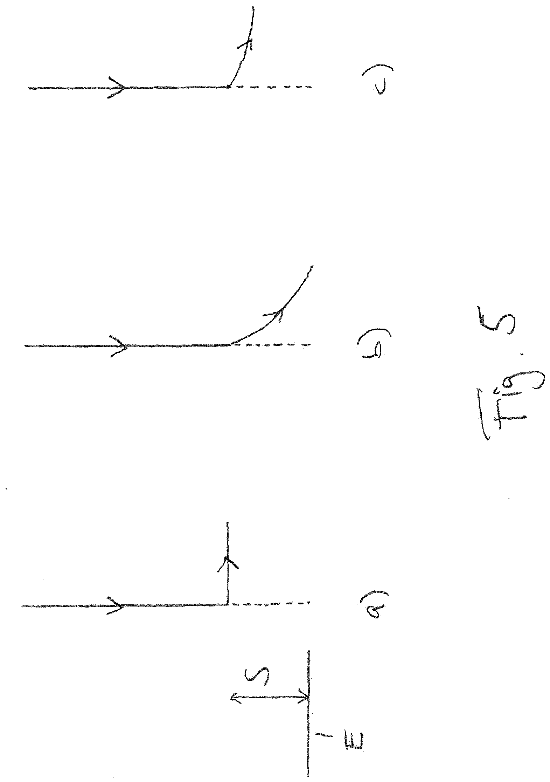

In Fig. 5 sind noch Beispiele für die Änderung der Bewegungsbahn der Werkzeugmitte gegenüber der Bewegungsbahn der ersten Bearbeitung bei angenommener Fortsetzung der Bearbeitung gemäß der Bewegungssteuerung der ersten Bearbeitung dargestellt. Fig. 5a entspricht dabei dem bevorzugten Ausführungsbeispiel einer Austauchbewegung ohne weiteren axialen Vorschub. Die Ausgestaltung von Fig. 5b zeigt dagegen eine Variante, bei der zwar ein axialer Vorschub beibehalten wird, diesem jedoch eine radiale Austauchbewegung überlagert wird. Diese Variante kann z.B. dann eingesetzt werden, wenn die Störkontur nur eine radiale Ausdehnung insoweit hat, dass die Kollisionsgefahr im Wesentlichen nur gegeben ist, wenn das Werkzeug nach Durchlaufen des Überlaufs noch mit voller radialer Tiefe zugestellt ist. Fig. 5c zeigt eine weitere Variation mit vorhandenem aber verringertem Überlauf.

Der gewonnene Spielraum durch Einsparung des Überlaufs kann auf mehrfache Weise genutzt werden. Zum einen kann für die Bearbeitung eines Werkstücks mit einer Störkontur ein größerer Achskreuzwinkel ∑ herangezogen werden und die Werkzeugauslegung für den größeren Achskreuzwinkel erfolgen. Eine herkömmliche Bearbeitung mit einem derart ausgelegten Werkzeug würde dann bei Bearbeitung des Werkstücks über die volle axiale Breite mit der Bewegungsachssteuerung der ersten Bearbeitung einen Sicherheitsabstand zur Störkante entweder nicht mehr einhalten oder bereits zu einer Kollision mit der Störkontur führen, der aber tatsächlich durch den Übergang zur zweiten Bearbeitung gemäß der Erfindung vermieden wird. Aufgrund des größer eingestellten Achskreuzwinkels erhöht sich die Schnittgeschwindigkeit und es können verkürzte Bearbeitungszeiten erreicht werden.

Eine andere Möglichkeit besteht darin, den Spielraum nicht zu einer Änderung der Werkzeugauslegung und für höhere Achskreuzwinkel und Schnittgeschwindigkeiten heranzuziehen, sondern ihn dafür zu nutzen, Werkstücke mit geringem axialen Abstand zwischen axialem Verzahnungsende und Störkontur im Wälzschälen zu bearbeiten, die andernfalls nicht mehr durch Wälzschälen bearbeitbar wären, sondern nur noch durch Wälzstoßen.

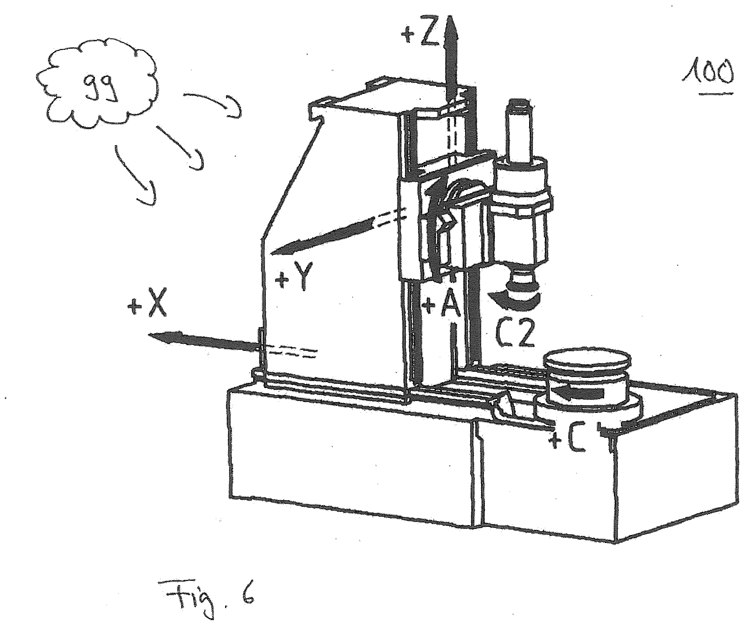

Fig. 6 zeigt noch eine Wälzschälmaschine 100 mit einer schematisch angedeuteten Steuerung 99. Die Maschinenachsen X (Radial), Y (Tangential), Z (Axial), A (Schwenkachse zur Einstellung von Achskreuzwinkel ∑, C2 (Werkzeugdrehachse und C (Werkstückdrehachse) erlauben die erforderlichen Relativbewegungen, damit die Steuereinrichtung 99 die Wälzschälmaschine 100 zur Ausführung der oben erläuterten Verfahren steuern kann. Der an dem Tangentialschlitten (für Y) angeordnete Werkzeugkopf ist mit Tangentialschlitten schwenkbar an einer Kreuzschlittenanordnung (für X und Z) angeordnet. Fig. 6 ist lediglich ein Beispiel für eine geeignete Maschine, andere Gestaltungen sind denkbar, z.B. hängende Spindeln, Pick-up Systeme etc..

Die Erfindung ist nicht auf die in den zuvor dargestellten Beispielen aufgeführten Spezifikationen eingeschränkt.

## Patentansprüche

1. Verfahren zum Bearbeiten einer eine Drehachse (C) aufweisenden Verzahnung (2), bei dem ein um seine Drehachse (B) drehend angetriebenes Bearbeitungswerkzeug (4) unter Ausführung einer Relativbewegung zwischen Bearbeitungswerkzeug und Verzahnung zum Erzeugen einer über die volle Verzahnungsbreite vorgegebenen Flankengeometrie der Verzahnung in Bearbeitungseingriff Material von der Verzahnung abnimmt, wobei die vorgegebene Flankengeometrie zu einer eine Bewegungsbahn der Werkzeugmitte gegenüber der Verzahnungsdrehachse festlegenden Bewegungssteuerung mit definiertem nicht verschwindenden axialen Vorschub bei definierter Zustellung zwischen Bearbeitungswerkzeug und Verzahnung passt,
**dadurch gekennzeichnet, dass** in einer ersten Bearbeitung die Relativbewegung nur für die Erzeugung eines insbesondere überwiegenden Anteils (5) der Flankengeometrie gemäß dieser Bewegungssteuerung ausgeführt wird, wohingegen ein weiterer, insbesondere der verbleibende Anteil (6) der Flankengeometrie in einer zweiten Bearbeitung erzeugt wird, bei welcher der Abstand der Werkzeugmitte von der Verzahnungsdrehachse gegenüber der festliegenden Bewegungsbahn in einer die Werkzeugmitte von der Verzahnung entfernenden Weise geändert ist, und bei der der dadurch bedingten Änderung des Bearbeitungseingriffs durch eine gegenüber der Bewegungssteuerung der ersten Bearbeitung zusätzlich vorgenommenen Bewegungsänderung der Relativbewegung entgegengewirkt wird.

2. Verfahren nach Anspruch 1, bei dem eine der gegenüber der Bewegungssteuerung der ersten Bearbeitung geänderte Relativbewegungsachse eine radiale Achse (X) ist.

3. Verfahren nach Anspruch 1 oder 2, bei dem die zusätzliche Bewegungsänderung wenigstens teilweise durch eine relative Zusatzdrehung von Verzahnungsdrehachse (C) und/oder Bearbeitungsdrehachse (B) realisiert ist.

4. Verfahren nach einem der vorhergehenden Ansprüche, bei dem eine Einstellung einer tangentialen Achse (Y) und/oder einer Drehung um die Achsabstandsachse zwischen den Drehachsen bei der zweiten Bearbeitung gegenüber der ersten Bearbeitung geändert ist.

5. Verfahren nach einem der vorhergehenden Ansprüche, bei dem die Verzahnung und das Bearbeitungswerkzeug während der Relativbewegung in Wälzeingriff miteinander stehen.

6. Verfahren nach einem der vorhergehenden Ansprüche, bei dem die Drehachsen von Verzahnung und Bearbeitungswerkzeug unter einem von Null verschiedenen Achskreuzwinkel (∑) angeordnet sind.

7. Verfahren nach Anspruch 6, bei dem die Schnittgeschwindigkeit bei den Bearbeitungen von dem Achskreuzwinkel abhängt.

8. Verfahren nach einem der vorhergehenden Ansprüche, bei dem das Bearbeitungswerkzeug ein Werkzeug mit geometrisch bestimmter Schneide und insbesondere ein Schälrad (4) ist.

9. Verfahren nach einem der vorhergehenden Ansprüche, bei dem der axiale Vorschub in der zweiten Bearbeitung auf weniger als 70%, bevorzugt weniger als 40%, insbesondere weniger als 20% gegenüber dem axialen Vorschub der ersten Bearbeitung verringert wird und insbesondere gestoppt wird.

10. Verfahren nach einem der vorhergehenden Ansprüche, bei dem die Flankengeometrie an der Links- oder Rechtsflanke vollständig in der ersten Bearbeitung erzeugt wird, und der weitere Anteil der Flankengeometrie zu der anderen Flanke gehört.

11. Verfahren nach einem der vorhergehenden Ansprüche, bei dem die Verzahnung Teil eines Werkstücks (3) mit einer weiteren Struktur ist, die in einem axialen Abstand von einem der axialen Verzahnungsenden eine radiale Ausdehnung aufweist.

12. Verfahren nach Anspruch 11, bei dem das Bearbeitungswerkzeug und/oder der Achskreuzwinkel derart ausgelegt/eingestellt ist, dass das Bearbeitungswerkzeug im Falle einer Erzeugung des weiteren Anteils der Flankengeometrie unter einer Beibehaltung der Relativbewegung der ersten Bearbeitung einen Sicherheitsabstand von der weiteren Struktur nicht mehr einhalten und insbesondere mit dieser kollidieren würde.

13. Verfahren nach einem der Ansprüche 6 bis 11, bei dem der Achskreuzwinkel in der ersten und/oder zweiten Bearbeitung wenigstens 8°, bevorzugt wenigstens 12°, insbesondere wenigstens 16° beträgt.

14. Computerprogrammprodukt, welches wenn auf einer Verzahnungsmaschine ausgeführt, diese zu einem Verfahren nach einem der vorhergehenden Ansprüche steuert.

15. Verzahnungsmaschine mit einer Werkstückaufnahme zur drehbaren Lagerung einer eine Drehachse aufweisenden Verzahnung und mit einer Werkzeugaufnahme zur um seine Drehachse drehend angetriebenen Lagerung eines Bearbeitungswerkzeugs, und mit Maschinenachsen, die eine radiale Zustellbewegung zwischen Bearbeitungswerkzeug und Verzahnung, eine axiale Vorschubbewegung mit Bewegungskomponente parallel zur Verzahnungsdrehachse erlauben sowie einer Steuereinrichtung, die dazu ausgelegt und programmiert ist, ein. Verfahren nach einem der Ansprüche 1 bis 13 auf der Verzahnungsmaschine auszuführen.

## Claims

1. A method for machining a toothing (2) having an axis of rotation (C), in which a machining tool (4) which is rotationally driven around its axis of rotation (B) removes material from the toothing while executing a relative motion between the machining tool and toothing in machining engagement to generate a flank geometry of the toothing , which has been predefined over the full width of the toothing, wherein the predefined flank geometry matches a motion control that defines a motion path of the tool centre with respect to the toothing axis of rotation, said motion control having a defined, non-vanishing axial advancement with a defined advancing motion between the machining tool and toothing,
**characterised in that**, in a first machining process, the relative motion is only executed for generating a particularly significant part (5) of the flank geometry according to this motion control, while a further part, in particularly the remaining part (6), of the flank geometry is generated in a second machining process, in which the distance between the tool centre and the toothing axis of rotation changes with respect to the fixed motion path in a manner wherein the tool centre moves away from the toothing, and in which the change to the machining engagement caused thereby is counteracted by an additionally executed change in motion of the relative motion with respect to the motion control of the first machining process.

2. The method according to claim 1, wherein an axis of relative motion changed with respect to the motion control of the first machining process is a radial axis (X).

3. The method according to claim 1 or 2, wherein the additional change in motion is effected at least in part by a relative additional rotation of the axis of rotation of the toothing (C) and/or the machining axis of rotation (B).

4. The method according to one of the preceding claims, wherein an adjustment of a tangential axis (Y) and/or a rotation around the axis of the centre distance between the axes of rotation is modified in the second machining process with respect to the first machining process.

5. The method according to one of the preceding claims, wherein the toothing and the machining tool are in rolling contact with each other during the relative motion.

6. The method according to one of the preceding claims, wherein the axes of rotation of the toothing and the machining tool are arranged such that the axes of rotation intersect at an angle (∑) other than zero.

7. The method according to claim 6, wherein the cutting speed during the machining processes is dependent on the angle at which the axes of rotation intersect.

8. The method according to one of the preceding claims, wherein the machining tool is a tool with a cutting edge with a defined geometry, and in particular is a skiving wheel (4).

9. The method according to one of the preceding claims, wherein the axial advancement in the second machining process is reduced to less than 70%, preferably less than 40% and in particular less than 20% compared to the axial advancement of the first machining process, and in particular is stopped.

10. The method according to one of the preceding claims, wherein the flank geometry on the left or right flank is produced entirely in the first machining process, and the further part of the flank geometry belongs to the other flank.

11. The method according to one of the preceding claims, wherein the toothing is part of a workpiece (3) with a further structure having a radial extension in an axial space from one of the axial ends of the toothing.

12. The method according to claim 11, wherein the machining tool and/or the angle at which the axes of rotation intersect is configured/adjusted such that, if the relative motion of the first machining process were to be maintained during the production of the further part of the flank geometry, the machining tool would no longer maintain a safety distance from the further structure, and in particular would collide with this further structure.

13. The method according to one of claims 6 to 11, wherein the angle at which the axes of rotation intersect in the first and/or second machining process is at least 8°, preferably at least 12°, in particular at least 16°.

14. A computer program product which, when executed on a gear-cutting machine, controls said gear-cutting machine to perform a method according to one of the preceding claims.

15. A gear-cutting machine comprising: a workpiece-holding device for the rotatable mounting of a toothing having an axis of rotation; a tool-holding device for the mounting of a machining tool that is rotatably driven around its axis of rotation; machine axes which allow a radial feed motion between the machining tool and toothing and an axial advancement motion, with a motion component parallel to the toothing axis of rotation; and a control device which is configured and programmed to perform a method according to one of claims 1 to 13 on the gear-cutting machine.

## Revendications

1. Procédé permettant d'usiner une denture (2) présentant un axe de rotation (C), dans lequel un outil d'usinage (4) entraîné en rotation sur son axe de rotation (B) enlève, en contact d'usinage, de la matière de la denture sous l'effet d'un déplacement relatif entre l'outil d'usinage et la denture de manière à produire une géométrie de flancs prédéfinie de la denture sur l'ensemble de la largeur de la denture, ladite géométrie de flancs prédéfinie convenant à une commande de déplacement déterminant une trajectoire de déplacement du centre de l'outil par rapport à l'axe de rotation de la denture, laquelle commande de déplacement présente une avance axiale définie non nulle lors d'une approche définie entre l'outil d'usinage et la denture,
**caractérisé en ce que**, dans une première opération d'usinage, le déplacement relatif n'est exécuté que pour produire une partie particulièrement prépondérante (5) de la géométrie de flancs conformément à ladite commande de déplacement, alors qu'une autre partie, notamment la partie résiduelle (6), de la géométrie de flancs est produite lors d'une deuxième opération d'usinage, au cours de laquelle l'écart entre le centre de l'outil et l'axe de rotation de denture est modifié par rapport à la trajectoire de déplacement déterminée, d'une manière éloignant le centre de l'outil de la denture, et au cours de laquelle la modification du contact d'usinage qui en découle est contrée par une modification supplémentaire du déplacement relatif par rapport à la commande de déplacement de la première opération d'usinage.

2. Procédé selon la revendication 1, dans lequel un axe de déplacement relatif modifié par rapport à la commande de déplacement de la première opération d'usinage est un axe radial (X).

3. Procédé selon la revendication 1 ou 2, dans lequel la modification supplémentaire du déplacement est réalisée au moins en partie par une rotation supplémentaire relative de l'axe de rotation de denture (C) et/ou de l'axe de rotation d'usinage (B).

4. Procédé selon l'une des revendications précédentes, dans lequel un réglage d'un axe tangentiel (Y) et/ou d'une rotation sur l'axe de l'entraxe créé entre les axes de rotation est modifié au cours de la deuxième opération d'usinage par rapport à la première opération d'usinage.

5. Procédé selon l'une des revendications précédentes, dans lequel la denture et l'outil d'usinage sont en contact à roulement mutuel pendant le déplacement relatif.

6. Procédé selon l'une des revendications précédentes, dans lequel les axes de rotation de la denture et de l'outil d'usinage sont disposés selon un angle de croisement des axes (∑) différent de zéro.

7. Procédé selon la revendication 6, dans lequel la vitesse de taillage mise en œuvre lors des opérations d'usinage dépend de l'angle de croisement des axes.

8. Procédé selon l'une des revendications précédentes, dans lequel l'outil d'usinage est un outil dont le tranchant de géométrie déterminée et consiste notamment en une roue de décolletage (4).

9. Procédé selon l'une des revendications précédentes, dans lequel l'avance axiale mise en œuvre lors de la deuxième opération d'usinage est réduite par rapport à l'avance axiale mise en œuvre lors de la première opération d'usinage pour en faire moins de 70 %, de préférence moins de 40 %, notamment moins de 20 % et est notamment interrompue.

10. Procédé selon l'une des revendications précédentes, dans lequel la géométrie de flancs sur le flanc droit ou gauche est totalement produite lors de la première opération d'usinage, et l'autre partie de la géométrie de flancs appartient à l'autre flanc.

11. Procédé selon l'une des revendications précédentes, dans lequel la denture fait partie d'une pièce à usiner (3) comportant une autre structure qui présente une étendue radiale selon un écart axial vis-à-vis d'une des extrémités de denture axiales.

12. Procédé selon la revendication 11, dans lequel l'outil d'usinage et/ou l'angle de croisement des axes est conçu/réglé de telle manière que, s'il y avait conservation du déplacement relatif de la première opération d'usinage lors de la production de l'autre partie de la géométrie de flancs, l'outil d'usinage ne pourrait plus respecter une distance de sécurité vis-à-vis de l'autre structure et viendrait notamment en collision avec celle-ci.

13. Procédé selon l'une des revendications 6 à 11, dans lequel l'angle de croisement des axes au cours de la première et/ou de la deuxième opération d'usinage fait au moins 8°, de préférence au moins 12°, notamment au moins 16°.

14. Produit-programme informatique qui, lorsqu'il est exécuté sur une machine à tailler les dentures, commande cette dernière de manière à effectuer un procédé selon l'une des revendications précédentes.

15. Machine à tailler les dentures comportant: un support de pièce à usiner destiné à supporter rotative une denture présentant un axe de rotation et un support d'outil destiné à supporter un outil d'usinage entraîné en rotation sur son axe de rotation, ainsi que des axes machine qui permettent un mouvement d'approche radial entre l'outil d'usinage et la denture et un mouvement d'avance axiale avec une composante de mouvement parallèle à l'axe de rotation de denture, ainsi qu'un dispositif de commande conçu et programmé pour exécuter un procédé selon l'une des revendications 1 à 13 sur ladite machine à tailler les dentures.
